# EUROPEAN PATENT APPLICATION

(11) **EP 2 728 891 A2**
(43) Date of publication of application: **07.05.2014**
(21) Application number: 14153434.7
(22) Date of filing: 03.10.2011
(51) Int. Cl.: H04N 21/239, G06F 21/10, H04L 29/06, H04N 21/222, H04N 21/2543, H04N 21/258, H04N 21/4782

(54) **Systems and methods for distributed authentication of video services**

(30) Priority: 08.12.2010 US 962810
(62) Divisional of application: 11846269.6
(71) Applicant: Ericsson Television Inc., Duluth, GA 30096 (US)
(72) Inventor: Finster, Paul, Manhattan Beach, CA California 90266 (US)
(74) Representative: HOFFMANN EITLE

(57) **Abstract**

Various embodiments of the present invention provide systems and methods for providing distributed authentication of subscribers of a content operator to a content provider. In particular instances, a subscriber of the content operator may visit a website of the content provider and various embodiments of the systems and methods facilitate providing the subscriber with a customized website based on the subscription of the subscriber with the content operator and/or content provider. Further, various embodiments of the systems and methods facilitate streaming high quality content to the subscriber while the subscriber is visiting the website.

## Description

### BACKGROUND OF THE INVENTION

High-bitrate (premium) media content is typically only available to consumers directly from network operators (such as cable television providers and/or satellite television providers) over managed distribution networks using infrastructure controlled by the network operators because such networks and infrastructure are needed to provide the capacity to stream such media content. As a result, such high-bitrate media content is not typically available to users over the Internet.

Today, many content providers are beginning to bypass these managed distribution networks to provide their content directly over the Internet. For example, content providers, such as HBO^{®} and Showtime^{®}, now have websites that Internet users can visit and view content for these providers. In many instances, this "over-the-top" (OTT) distribution of video content may pass through an operator's network, bypassing the subscription mechanisms created by the operator's infrastructure, and utilizing what is commonly government-mandated network neutral Data Over Cable Interface Specification (DOCSIS) or fiber networks meant for generic broadband content. This can result in a limitation imposed on the content provider in that its content must be streamed at a lower bitrate than the bitrate that may be streamed over an operator's managed distribution network, thus lowering the quality of the content for the recipient. As for the operator, this may result in possible loss of subscriber revenue because the content is provided without having to pass through the operator's subscription mechanisms.

Therefore, a need exists in the art to allow for this additional avenue to be used to provide media content to one or more users while providing such media content in a high level of quality and allowing operators to still control access to this content through their subscription mechanisms.

### BRIEF SUMMARY OF THE INVENTION

Various embodiments of the invention provide systems and methods for authenticating a subscriber of a content distribution operator requesting a website of a content provider. In general, these embodiments include receiving a request from the subscriber, the request identifying the website, and retrieving subscription information on the subscriber from one or more storage media. These systems and methods in various embodiments involve determining, from the subscription information, a level of subscription the subscriber has with respect to media content provided by the content provider and distributed by the content distribution operator, inserting a token into the request, the token identifying the level of subscription, and routing the request to a web server. In various embodiments, the level of subscription is configured to indicate whether the subscriber is entitled to receive premium quality content so that the web server provides the particular version of the website providing access to high definition quality content. Thus, in particular embodiments, the request is configured so that the web server can read the token to identify the level of subscription for the subscriber and provide a particular version of the website to the subscriber that is based on the level of subscription.

In various embodiments, the token includes one or more fields provided in the header of the request. In other embodiments, the token includes one or more fields provided in a cookie that is downloaded to a computing device of the subscriber. In particular embodiments, the fields of the token may include one or more of: (1) operator name, (2) operator, (3) operator locale, (4) duration, (6) URL, (7) service level, (8) subscriber information, and (9) sequence.

In particular embodiments, the content distribution operator provides the token to a plurality of content providers and various systems and methods of the invention involve retrieving website information from storage media indicating whether the content provider is one of the plurality of content providers to which the content distribution operator provides the token and, in response to the content provider being one of the plurality of content providers, performing the operation of providing the token in the request. In addition, in particular embodiments, various systems and methods involve receiving a request from the web server to stream a particular version of the website over a distribution network of the content distribution operator and, in response to receiving the request, stream the particular version of the website over the distribution network to a computing device of the subscriber. In particular embodiments, the version of the website may need to be reformatted into a format that is compatible with the distribution network. In addition, in various embodiments, the systems and methods may involve receiving a request from the web server to stream a particular piece of media content made available on the website over the content distribution network and, in response to receiving the request, stream the particular piece of media content over the content distribution network to the computing device of the subscriber. In various embodiments, this particular piece of media content may be retrieved media storage and may be streamed over the content distribution network to the computing device of the subscriber.

Furthermore, various embodiments of the invention may provide systems and methods for selecting a website of a content provider to provide to a subscriber of a content distribution operator. In particular embodiments, these systems and methods involve receiving a request for the website, the request including a token identifying a level of subscription the subscriber has with respect to media content provided by the content provider and distributed by the content distribution operator, determining from the token the level of subscription for the subscriber, and providing a particular version of the website to the subscriber based on the level of subscription.

In various embodiments, the level of subscription entitles the subscriber access to premium quality media content and the particular version of the website provides access to the premium quality media content. Further, in various embodiments, the token identifies the content distribution operator and the particular version of the website is also based on the content distribution operator. In addition, in particular embodiments, the website is provided by the content distribution operator.

In various embodiments, these systems and methods involve receiving a subsequent request to stream a particular piece of media content made available on the website and, in response to receiving the subsequent request, determining whether to stream the particular piece of media content over a content distribution network of the content distribution operator. In addition, in these particular embodiments, the systems and methods involve, in response to determining to stream the particular piece of media content over the content distribution network, sending a content media request to the content distribution operator requesting the content distribution operator to stream the particular piece of media content over the content distribution network to a computing device of the subscriber.

In addition, various embodiments of the invention provide systems and methods for routing a particular piece of media content provided by a content provider to a web browser residing on a computing device of a subscriber of a content distribution operator. In these particular embodiments, the systems and methods involve receiving a request to route the particular piece of media content over a content distribution network of the content distribution operator to the web browser residing on the computing device of the subscriber, retrieving the particular piece of media content, and streaming the particular piece of media content over the content distribution network to the web browser residing on the computing device of the subscriber. In particular embodiments, the request includes an identifier for a format quality to provide the particular piece of media content in and the particular piece of media content is retrieved in the format quality, such as high definition format. Further, in particular embodiments, the piece of media content is streamed over the content distribution network using a security mechanism that includes at least one of a secure socket layer, transport layer security, or hypertext transfer protocol secure.

In various embodiments, the systems and methods involve determining whether the particular piece of media content is available through the content distribution operator and, in response to the particular piece of media content being available through the content distribution operator, retrieving the particular piece of media content from the content distribution operator. Further, in various embodiments, if the particular piece of media content is not available through the content distribution operator, the systems and methods involve retrieving the particular piece of media content from a source external of the content distribution operator. In particular embodiments, the source external of the content distribution operator may be one or more storage media of the content provider. Further, in various embodiments, the systems and methods may involve identifying a locally situated content distribution network located nearest the subscriber, retrieving the particular piece of media content from the identified locally situated content distribution network, and streaming the particular piece of media content over the identified locally situated content distribution network to the web browser residing on the computing device of the subscriber.

### BRIEF DESCRIPTION OF THE DRAWINGS

Having thus described various embodiments of the invention in general terms, reference will now be made to the accompanying drawings, which are not necessarily drawn to scale, and wherein:
FIG. 1 shows an overview of an embodiment of a system architecture that can be used to practice aspects of the present invention.
FIG. 2 is a schematic diagram illustrating an HTTP proxy server according to various embodiments of the invention.
FIG. 3 is a flow diagram of an authentication module according to various embodiments of the invention.
FIG. 4 is a flow diagram of a website module according to various embodiments of the invention.
FIG. 5 is a flow diagram of a content services module according to various embodiments of the invention.

### DETAILED DESCRIPTION OF THE INVENTION

The present invention now will be described more fully with reference to the accompanying drawings, in which some, but not all embodiments of the invention are shown. Indeed, this invention may be embodied in many different forms and should not be construed as limited to the embodiments set forth herein. Like numbers refer to like elements throughout.

As should be appreciated, the embodiments may be implemented in various ways, including as methods, apparatus, systems, or computer program products. Accordingly, the embodiments may take the form of an entirely hardware embodiment or an embodiment in which a processor is programmed to perform certain steps. Furthermore, the various implementations may take the form of a computer program product on a computer-readable storage medium having computer-readable program instructions embodied in the storage medium. Any suitable computer-readable storage medium may be utilized including hard disks, CD-ROMs, optical storage devices, or magnetic storage devices.

The embodiments are described below with reference to block diagrams and flowchart illustrations of methods, apparatus, systems, and computer program products. It should be understood that each block of the block diagrams and flowchart illustrations, respectively, may be implemented in part by computer program instructions, e.g., as logical steps or operations executing on a processor in a computing system. These computer program instructions may be loaded onto a computer, such as a special purpose computer or other programmable data processing apparatus to produce a specifically-configured machine, such that the instructions which execute on the computer or other programmable data processing apparatus implement the functions specified in the flowchart block or blocks.

These computer program instructions may also be stored in a computer-readable memory that can direct a computer or other programmable data processing apparatus to function in a particular manner, such that the instructions stored in the computer-readable memory produce an article of manufacture including computer-readable instructions for implementing the functionality specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide operations for implementing the functions specified in the flowchart block or blocks.

Accordingly, blocks of the block diagrams and flowchart illustrations support various combinations for performing the specified functions, combinations of operations for performing the specified functions and program instructions for performing the specified functions. It should also be understood that each block of the block diagrams and flowchart illustrations, and combinations of blocks in the block diagrams and flowchart illustrations, can be implemented by special purpose hardware-based computer systems that perform the specified functions or operations, or combinations of special purpose hardware and computer instructions.

### System Achitecture

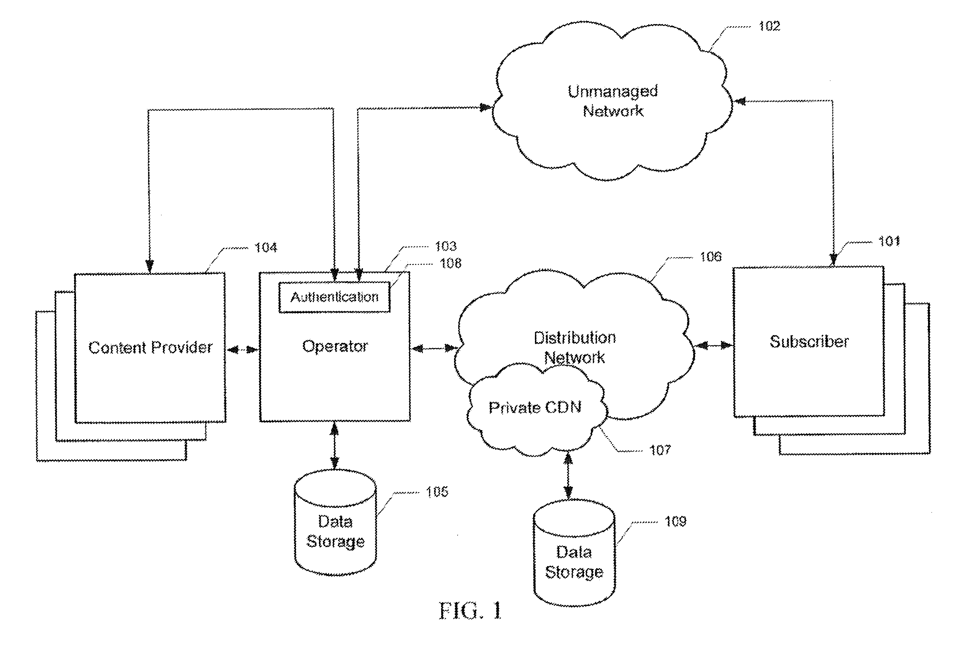

FIG. 1 provides an illustration of a system architecture that can be used in conjunction with various embodiments of the present invention. However, it should be noted that other system architectures are contemplated to be within the scope of embodiments of this invention. In the embodiment shown in FIG. 1, the system architecture includes an operator (e.g., operator's system) **103** providing video programming to one or more subscribers **101.** For instance, the operator 103 may be a cable television provider or a satellite television provider. However, for the remainder of this disclosure, the operator **103** is a cable television provider (such as Time Warner Cable^{®}, Comcast^{®}, and/or Cox Communication^{®}).

In various embodiments, the operator 103 may be providing a number of services to the subscribers 101 such as cable television programming, telephone service, and Internet service. Thus, as shown in FIG. 1, the system architecture includes a distribution network **106** in communication with the operator **103** and one or more subscribers **101** over which the operator **103** streams media content to the one or more subscribers **101.** The term "media content" typically refers to content that includes such forms as text, audio, still images, animation, video, and interactivity content. For example, the operator **103** may stream video programming and other services, such as Video-On-Demand (VOD) and/or audio, over the distribution network **106** to the one or more subscribers **101.** Therefore, the distribution network **106** may include fixed optical fibers or coaxial cables and may provide high quality media programming such as High-Definition (HD) television.

Further, the system architecture may include one or more private Content Delivery Networks or Content Distribution Networks (CDN) **107** that include a system of computers and/or storage media **109** containing copies of data, placed at various points within the operator's distribution network **106** so as to maximize bandwidth for access to data throughout the network **106.** In various embodiments, the storage media **109** may be one or more types of media such as hard disks, magnetic tapes, or flash memory for storing various types of media content. Therefore, within such a network **107,** a subscriber **101** may be provided with data (e.g., a streamed video program) nearer to the subscriber **101,** as opposed to being provided with the data from a central location within the operator's system **103.** In particular embodiments, such a network **107** may avoid "bottlenecks" within the distribution network **106** and may improve the backbone capacity of the distribution network **106** and thus the quality of the content provided by the operator **103.**

The system architecture may also include an unmanaged network **102,** as shown in FIG. 1. For instance, in particular embodiments, the unmanaged network **102** may be based on DOCSIS which permits the addition of high-speed data transfer over the operator's distribution system. Thus, the operator **103** may provide Internet service to its various subscribers **101** over such a network **102.** The network **102** is referred to as "unmanaged" because typically content is provided over this network **102** by bypassing the secure, managed infrastructure provided by the operator **103.** Therefore, in many instances, this network **102** is generally meant for generic broadband content, and as a result, may be limited to streaming data at a lower bitrate than the bitrate that may be streamed over the operator's distribution network **106.**

In the embodiment shown in FIG. 1, the operator **103** is also in communication with one or more content providers **104.** These content providers **104** provide media content to the operator 103 so that the operator **103** may make the content available to its subscribers **101.** For example, in one embodiment, the operator **103** may receive content from Home Box Office^{®} (HBO^{®}), a distributor of premium paid television services. This content may be received through various channels of communication within the system architecture. For example, in one embodiment, one or more of the content providers **104** stream the content over satellite communication to a central location within the operator's system **103.** However, in other embodiments, the content providers **104** may provide the content over one or more wired networks, such as dedicated fiber optic networks, and/or provide the content on portable storage devices such as removes disks and/or flash drives. In many instances, upon receiving the content, the operator **103** stores the content on one or more data storage media **105** within the operator's system **103** and/or on one or more storage media **109** located within one or more CDN **107.** Again, the storage media may be one or more types of media such as hard disks, magnetic tapes, or flash memory.

Finally, the operator 103 may include an authentication system **108** configured to authenticate subscribers **101** of the operator **103** and to authenticate the services available to the subscribers **101.** According to various embodiments, this system **108** may include one or more components such as servers and storage media. For instance, the authentication system **108** may be configured to authenticate a subscriber **101** is a customer of the operator **103** (e.g., the subscriber **101** is a customer in "good-standing" with the operator **103)** and is a customer entitled to a particular service with the operator **103** (e.g., the subscriber **101** is a customer with a subscription to HBO^{®}). As is described in further detail below, the operator **103** may provide information on authenticating a subscriber **101** to the one or more content providers **104** in particular situations. For instance, in one embodiment, the operator **103** may be in electronic communication with the one or more content providers **104** and may provide authentication information for subscribers 101 to the one or more content providers **104** over the same or different wireless or wired networks including a wired or wireless Personal Area Network ("PAN"), Local Area Network ("LAN"), Metropolitan Area Network ("MAN"), Wide Area Network ("WAN"), the Internet, or the like.

### Exemplary HTTP Proxy Server

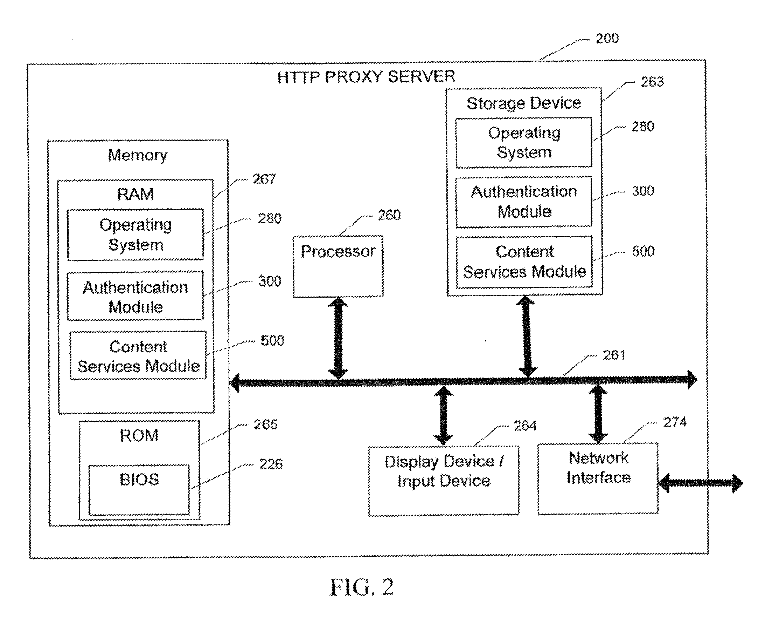

FIG. 2 provides a schematic of an HTTP proxy server **200** according to one embodiment of the present invention. The term "server" is used generically to refer to any computer, computing device, desktop, notebook or laptop, distributed system, server, gateway, switch, or other processing device adapted to perform the functions described herein. In various embodiments, the HTTP proxy server **200** is a part of the operator's system **103** depicted in FIG. 1. For instance, in particular embodiments, the HTTP proxy server **200** is a part of the authentication system **108** described above with regard to the operator's system **103.**

As will be understood from this figure, in this embodiment, the HTTP proxy server **200** includes a processor **205** that communicates with other elements within the HTTP proxy server **200** via a system interface or bus **261.** The processor **205** may be embodied in a number of different ways. For example, the processor **205** may be embodied as various processing means such as a processing element, a microprocessor, a coprocessor, a controller or various other processing devices including integrated circuits such as, for example, an application specific integrated circuit ("ASIC"), a field programmable gate array ("FPGA"), a hardware accelerator, or the like. In an exemplary embodiment, the processor **205** may be configured to execute instructions stored in the device memory or otherwise accessible to the processor **205.** As such, whether configured by hardware or software methods, or by a combination thereof, the processor **205** may represent an entity capable of performing operations according to embodiments of the present invention while configured accordingly. A display device/input device **264** for receiving and displaying data is also included in the HTTP proxy server **200.** This display device/input device **264** may be, for example, a keyboard or pointing device that is used in combination with a monitor. The HTTP proxy server **200** further includes memory **263,** which may include both read only memory ("ROM") **265** and random access memory ("RAM") **267.** The HTTP proxy server's ROM **265** may be used to store a basic input/output system ("BIOS") **226** containing the basic routines that help to transfer information to the different elements within the HTTP proxy server **200.**

In addition, in one embodiment, the HTTP proxy server **200** includes at least one storage device **268,** such as a hard disk drive, a CD drive, and/or an optical disk drive for storing information on various computer-readable media. The storage device(s) **268** and its associated computer-readable media may provide nonvolatile storage. The computer-readable media described above could be replaced by any other type of computer-readable media, such as embedded or removable multimedia memory cards ("MMCs"), secure digital ("SD") memory cards, Memory Sticks, electrically erasable programmable read-only memory ("EEPROM"), flash memory, hard disk, or the like. Additionally, each of these storage devices **268** may be connected to the system bus **261** by an appropriate interface.

Furthermore, a number of program modules (e.g., set of computer program instructions) may be stored within the various storage devices **268** and/or within RAM **267.** Such program modules may include an operating system **280,** an authentication module **300,** and a content services module **500.** These modules **300, 500** may control certain aspects of the operation of the HTTP proxy server **200** with the assistance of the processor **205** and operating system **280,** although their functionality need not be modularized.

Also located within the HTTP proxy server **200,** in one embodiment, is a network interface **274** for interfacing with various computing entities. This communication may be via the same or different wired or wireless networks (or a combination of wired and wireless networks). For instance, the communication may be executed using a wired data transmission protocol, such as fiber distributed data interface ("FDDI"), digital subscriber line ("DSL"), Ethernet, asynchronous transfer mode ("ATM"), frame relay, data over DOCSIS, or any other wired transmission protocol. Similarly, the HTTP proxy server **200** may be configured to communicate via wireless external communication networks using any of a variety of protocols, such as 802.11, general packet radio service ("GPRS"), wideband code division multiple access ("W-CDMA"), or any other wireless protocol.

It will be appreciated that one or more of the HTTP proxy server's **200** components may be located remotely from other HTTP proxy server **200** components, such as multiple HTTP proxy servers **200** making up the operator's system 103. Furthermore, one or more of the components may be combined and additional components performing functions described herein may be included in the HTTP proxy server 200.

### Additional Exemplary Components

The one or more content provider systems **104** shown in FIG. 1 may also include components and functionality similar to that of the HTTP proxy server **200.** For example, in one embodiment, the one or more content provider systems **104** may include one or more servers in which each server includes: (1) a processor that communicates with other elements via a system interface or bus; (2) a display device/input device; (3) memory including both ROM and RAM; (4) a storage device; and (5) a network interface. Further, these servers may include a number of program modules stored by the various storage devices and within RAM of the servers. For example, each server within a content provider's system **104** may include an operating system and a website module **400.** This module **400** may be used to control certain aspects of the operation of the server, as is described in more detail below, with the assistance of the processor and an operating system.

Thus, these server architectures are provided for exemplary purposes only and are not limiting to the various embodiments. The term "server" is used generically to refer to any computer, computing device, desktop, notebook or laptop, distributed system, server, gateway, switch, or other processing device adapted to perform the functions described herein.

### Exemplary System Operation

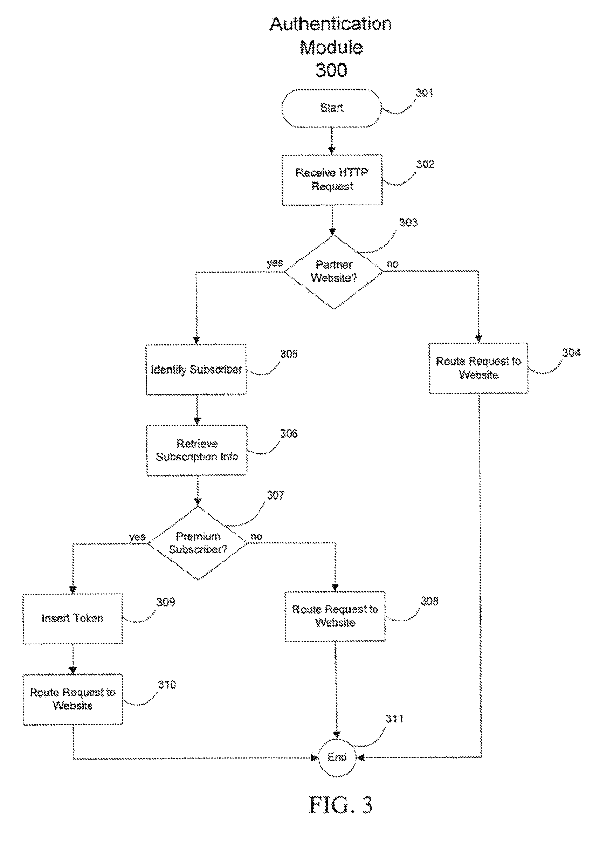

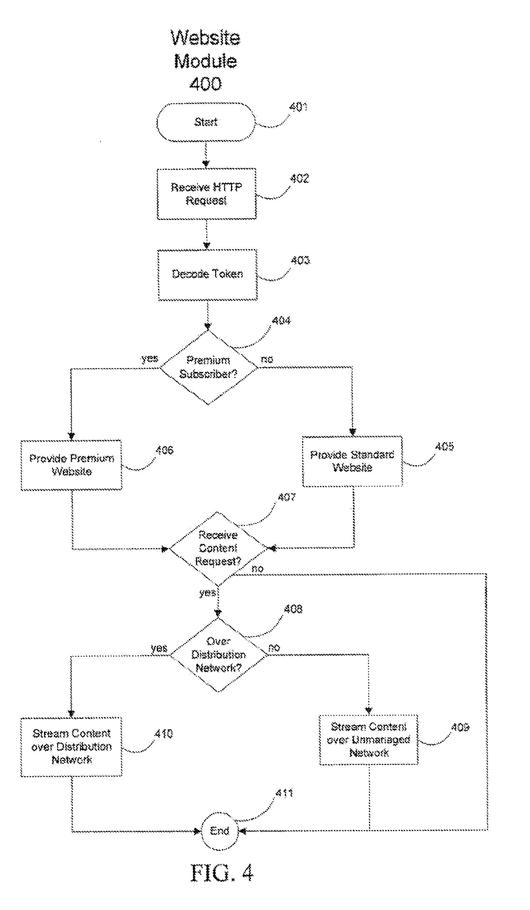

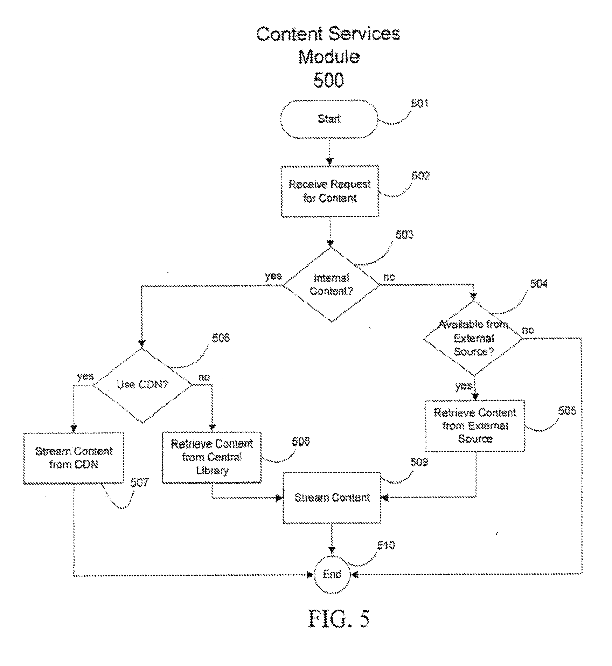

As noted above, various embodiments of the present invention provide systems and methods for providing distributed authentication of subscribers 101 of a content operator 103, such as a cable provider, and services for these subscribers. Reference will now be made to FIGS. 3-5 which illustrate operations and processes as produced by various embodiments. For instance, FIG. 3 provides a flow diagram of an authentication module 300 configured to authenticate a subscriber 101 and the services available to a subscriber 101 according to various embodiments. FIG. 4 provides a flow diagram of a website module 400 configured to determine a website format to provide a subscriber 101 and to determine how to stream requested content to the subscriber 101. FIG. 5 provides a flow diagram of a content services module 500 configured to retrieve content either locally or from an external source and to stream the content to a subscriber 101. These modules are described in greater detail below.

### Authentication Module

Today, many content providers **104** provide access to the content they produce through other channels besides an operator **103,** such as a cable provider. For instance, many content providers **104** post a website on the Internet that may be visited by users and these users may request to view/listen to particular pieces of the provider's content on these websites. For example, a user may be using a web browser on his personal computer and may visit HBO.com, a website provided by content provider HBO^{®}. Once on the website, the user may be able to access content of the content provider **104.** For instance, in this example, the user may be able to access past episodes of HBO's original series "Boardwalk Empire." The user selects the desired episode and the episode is streamed to the user's web browser over the Internet so that the user may view the episode on his personal computer. However, in many instances, the quality of the content cannot be provided in a premium format because the episode is being streamed over the Internet (e.g., in many instances, the Internet is only able to handle a lower bitrate than a operator's distribution network **106** and as a result the user can only receive the episode in a lower quality format than if the user were viewing the episode through his cable provider). However, the user may be entitled to a higher quality format than what he may receive over the Internet. For instance, the user may be a "premium" subscriber to the HOB^{®} service and may be entitled, under his subscription, to receive HBO^{®} content in HD.

Therefore, in instances in which the user is a subscriber **101** of an operator **103** (e.g., cable provider) and the subscriber **101** receives his Internet service through the operator **103,** various embodiments of the invention are configured to provide media content to the subscriber's browser in a higher quality format. Thus, returning to the example, the subscriber **101** is at home using his web browser on his personal computer and the subscriber **101** navigates to HBO.com. An HTTP request for the website is communicated over the operator's unmanaged network **102** and is passed to an authentication module **300** residing on the HTTP proxy server **200** located within the operator's system **103.** Accordingly, FIG. 3 illustrates a flow diagram of the authentication module **300** according to various embodiments. This flow diagram may correspond to the steps carried out by the processor **260** in the HTTP proxy server **200** shown in FIG. 2 as it executes the module **300** in the server's RAM memory **267** according to various embodiments.

In Step **302,** the authentication module **300** receives the HTTP request and determines whether the website associated with the request is a partner website, shown as Step **303.** For instance, in various embodiments, the operator **103** may have a number of content provider "partners" that have websites that may be visited by subscribers **101** of the operator **103.** Therefore, in these particular embodiments, the authentication module **300** may look to see whether the requested website is a website of one of these content provider partners. For example, the operator **103** may store information on these various websites in local storage media **105** and the authentication module **300** may query this information to determine whether the requested website is a website for one of the content provider partners.

If the authentication module **300** determines the website being requested in the HTTP request is not a partner website, the authentication module **300** simply routes the request to the appropriate website, shown as Step **304.** For instance, if the HTTP request is for ESPN.com, the authentication module **300** routes the request to the web server for ESPN.com so that the web server may provide the corresponding web page to the subscriber's web browser.

However, if the authentication module **300** determines the website being requested in the HTTP request is a partner website, the authentication module **300** identifies the subscriber **101** associated with the HTTP request, shown as Step **305.** For instance, identification information may be included in the TCP packet in which the HTTP request was sent over the unmanaged network **102** to the operator's proxy server **200.** This identification information may be information such as the subscriber's personal computer's MAC address or may be the IP address assigned to the subscriber's personal computer within the operator's unmanaged network **102.** Thus, in these particular instances, the authentication module **300** may be configured to look up the MAC address or the IP address and determine what subscriber's computer is associated with the MAC address or the IP address provided in the identification information.

Once the subscriber **101** has been identified, the authentication module **300** retrieves the subscription information for the subscriber **101,** shown as Step **306.** Thus, in particular embodiments, the operator **103** stores subscription information in one or more storage media **105** located internally or externally of the operator's system **103** and the authentication module **300** queries this information to retrieve the subscription information for the particular subscriber **101** associated with the HTTP request. In particular embodiments, the subscription information may also be made available to various content providers **104** and/or the operator **103** and content providers **104** may compose lists of premium subscribers that both have access to.

Once the authentication module **300** has retrieved the subscription information for the subscriber **101,** the authentication module **300** determines what subscription services the subscriber **101** has that correspond with the requested website. Therefore, returning to the example, the authentication module **300** looks to see what subscription services the subscriber 101 has with respect to HBO^{®}. In various embodiments, the subscription services for a particular content provider **104** may include a number of different options. For instance, the content provider **104** may have "levels" of subscription services depending on the types and/or quality of media content available through the content provider 104. For example, HBO^{®} may have a standard subscription that provides its television programming in a lower quality format (e.g., non-HD format) and a premium subscription that provides its television programming in a higher quality format (e.g., HD format). Further, HBO^{®} may have subscriptions based on the type of programming provided through the subscription. For example, HBO^{®} may provide a subscription to an on-demand service for its original series or for its exclusive sporting events. Thus, the content providers **104** may provide any number of subscription options according to various embodiments.

Returning to FIG. 3, in the example, the authentication module **300** determines whether the subscriber **101** is a "premium" subscriber to HBO^{®}, shown as Step **307.** In this particular example, the premium subscription entitles the subscriber **101** to receive HBO^{®} content in HD format. However, as explained above, it should be understood that in various embodiments the content provider **104** may provide any number of different types of subscriptions. Therefore, in this particular example, the authentication module **300** is configured to determine whether the subscriber **101** is a premium subscriber of HBO^{®}. However, in other embodiments, the authentication module **300** may be configured to determine whether the subscriber **101** is any number of other types of subscribers. Further, in various embodiments, the authentication module **300** may be configured to look for different types of subscriptions based on the particular content provider **104** associated with the HTTP request. For instance, in one embodiment, the authentication module **300** may be configured to determine whether the subscriber **101** is a standard or a premium subscriber if the request involves HBO.com and to determine whether the subscriber **101** is a standard, a high-definition, or a deluxe subscriber if the request involves SHO.com (Showtime's^{®} website).

Therefore, if the authentication module **300** determines the subscriber **101** is not a premium subscriber, the authentication module **300** simply routes the HTTP request to the web server for HBO.com, shown as Step **308.** However, if the authentication module **300** determines the subscriber **101** is a premium subscriber, the authentication module **300** inserts a token into the HTTP request, shown as Step **309.** In particular embodiments, this step entails the authentication module **300** inserting one or more fields into a cookie that is downloaded to the subscriber's computing device or into the header of the HTTP request. For example, the authentication module **300** may insert one or more fields such as: (1) Operator Name = TimeWarnerCable, (2) Operator Region = New York City, (3) Operator Locale = Manhattan, (4) Duration = 4 hours, (5) Expires = 2009-08-25:13:52:00, (6) URL = HBO.com/timewarnercable, (7) Service Level = Silver Premium Elite, (8) Subscriber Information = name;address;etc, and (9) Sequence = sequential unique identifier or request count. Thus, in particular embodiments, a text string may be added to the request that indicates the operator 103, identifies the subscriber 101 as a premium subscriber, and provides specific instructions to the downstream web server (e.g., web server for HBO.com) on how to provide the subscriber **101** with services on the content provider's **104** website.

Finally, in Step **310,** the authentication module **300** routes the modified request to the appropriate web server. Thus, in the example, the authentication module **300** routes the request identifying the subscriber **101** as a premium subscriber to the web server for HBO.com. As is described in greater detail below, the web server for HBO.com provides web services to the subscriber **101** based on the information provided in the HTTP request.

### Website Module

As mentioned, in various embodiments, the authentication module **300** is configured to route the HTTP request received from a subscriber **101** to the appropriate web server based on the website being requested. For instance, in the example discussed above, the authentication module 300 routes the HTTP request for HBO.com to the HBO.com web server. Therefore, in various embodiments, the web servers of one or more of the content providers **104** include a website module **400** configured to receive the HTTP request and determine from the request what website and corresponding content to provide to the subscriber 101. Accordingly, FIG. 4 illustrates a flow diagram of the website module **400** according to various embodiments. This flow diagram may correspond to the steps carried out by a processor in a particular web server as it executes the module **400** in the server's RAM memory according to various embodiments.

In Step **402,** the website module **400** receives the HTTP request. Therefore, returning to the example, the website module **400** for HBO.com receives the HTTP request from the authentication module **300.** As may be understood by those of ordinary skill in the art, the web server on which the website module **400** resides may be providing more than one website on the Internet. For instance, the web server associated with HBO.com may also be providing websites for other content providers **104,** such as websites for ESPN^{®} and/or CNN^{®}. However, for simplicity of this disclosure, the web server in the example is only associated with HBO.com. Further, in particular embodiments, the web server may be a part of the operator's network. That is, in these particular embodiments, the operator 103 may operator the web server hosting the content provider's website (e.g., HBO.com). Thus, the web server may operator within the bounds of the operator's network (e.g., unmanaged network **102** and/or distribution network **106).**

Therefore, in Step **403,** the website module **400** decodes the token provided in the HTTP request and/or retrieved from a cookie residing on the subscriber's computing device. That is, in particular embodiments, the website module 400 deciphers the various fields provided in the HTTP request header and/or the cookie. In Step **404,** the website module **400** determines what type of subscriber **101** has requested the webpage. In particular embodiments, this step may involve the website module 400 not only determining the subscription for the subscriber 101 but may also involve determining other information associated with the request, such as the operator 103 for the subscriber 101. As is described in greater detail below, such information may be used in various embodiments by the website module 400 in determining what website to provide to the subscriber 101, what content to make available on the website, and from what source to use to provide content to the subscriber 101.

Thus, returning to the example, if the website module **400** determines the subscriber **101** is not a premium HBO^{®} subscriber **101** the website module **400** provides the standard website to the subscriber **101,** shown as Step **405.** For instance, in various embodiments, the standard website is the website that is generally provided to any user that requests to visit HBO.com, whether the user is or is not a subscriber **101** to an operator **103** and/or HBO^{®}. Therefore, in these particular embodiments, the user is provided with the standard HBO.com website and with the services and content that any general user may access and view. Furthermore, in these particular embodiments, the content is typically provided in a format that is compatible with the Internet and the operator's unmanaged network **102.**

However, if the website module **400** determines that the subscriber **101** is a premium subscriber, the website module **400** in various embodiments provides a premium website to the subscriber **101,** shown as Step **406.** For instance, returning to the example, the website module **400** may provide a website to the subscriber **101** that includes services and content that are not typically available on the standard HBO.com website. For example, the subscriber **101** may be able to access more content than is available on the standard HBO.com website. In addition, as is described in greater detail below, the subscriber **101** may be able to access higher quality content, such as HD content, than what is available on the standard HBO.com website. Therefore, as one of ordinary skill in the art can envision in light of this disclosure, the website module **400** may be configured in various embodiments to provide a number of different websites that are customized based on the subscriber's subscription. In addition, in various embodiments, this customization may be based on more than just the subscriber's subscription. For example, the website module **400** may also be configured to determine which website to provide the subscriber **101** based on the operator **103** the subscriber **101** is associated with. For instance, the website module **400** may provide the subscriber **101** with a Timer Warner Cable HBO.com or Comcast^{®} HBO.com, depending on which operator **103** the subscriber **101** receives his cable service from.

Thus, the website module **400** provides the website to the subscriber **101.** Depending on the embodiment, the website is typically provided to the subscriber 101 through the "normal" Internet channel, such as the operator's unmanaged network **102.** However, in particular embodiments, the operator **103** may provide the website over the operator's distribution network **106.** Although, in these particular embodiments, the operator **103** may also need to re-format the website data into a format compatible with the operator's distribution network **106,** such as MPEG for example.

The subscriber **101** views the website and may decide to view a piece of content provided through the website. For instance, returning to the example, the subscriber **101** may decide to watch an episode of the HBO^{®} series "Boardwalk Empire." In this case, the subscriber 101 selects an option on the HBO.com website to view the episode of "Boardwalk Empire." In various embodiments, the request is directed to the authentication module **300** residing on the operator's proxy server **200.** As a result, the authentication module **300** inserts the token into the request. That is, in particular embodiments, the authentication module **300** inserts one or more fields into a cookie provided in the HTTP request and/or into the header of the HTTP request. The request is then forwarded to the HBO.com web server and subsequently to the website module **400.** In this instance, the website module **400** follows the same process as previously described with respect to Steps **402, 403, 404, 405,** and **406.**

However, in this instance, the website module **400** determines whether content has been requested by the subscriber **101,** shown as Step **407.** If content has not been requested, the website module **400** exits the process, shown as Step **411.** However, if content has been requested, the website module **400** determines whether the content is to be streamed over the operator's distribution network **106** to the subscriber **101,** shown as Step **408.** Therefore, in the example, if the website module **400** determines that the episode of "Boardwalk Empire" is not to be streamed over the operator's distribution network **106** to the subscriber **101** (e.g., the subscriber **101** is not entitled to view an HD version of the episode), the website module **400** simply streams the episode to the subscriber **101** over the "normal" Internet channel, shown as Step **409.** Thus, website module **400** may direct the HBO.com web server to stream a local version of the episode stored within the content provider's **104** library (e.g., local storage media) over the Internet and over the operator's unmanaged network 102 to the subscriber's 101 web browser. In this case, the web server may only be able to provide a lower quality format version of the episode since the episode is being provided over the Internet and the operator's unmanaged network **102.**

However, if the website module **400** determines that the episode should be streamed to the subscriber **101** over the operator's distribution network **106** (e.g., the subscriber **101** is entitled to view an HD version of the episode), the website module **400** directs the web server to inform the operator **103** to provide the episode to the subscriber **101** over the operator's distribution network **106,** shown as Step **410.** As is described in greater detail below, the operator **103** then provides the episode over its distribution network **106** to the subscriber's web browser. As a result, in various embodiments, the subscriber **101** in able to view the episode in a higher quality format than had the episode been streamed over the Internet and the operator's unmanaged network **102** to the subscriber's **101** web browser.

Finally, as noted above, the website module **400** may be configured in various embodiments to consider more than the subscriber's **101** subscription in determining whether to have the content streamed to the subscriber **101** over the operator's distribution network. For instance, in various embodiments, the website module **400** may be configured to also determine whether the content is available within the operator's system **103.** For example, in the instance in which the subscriber **101** has requested to view the episode of the "Boardwalk Empire," the website module **400** determines whether the operator **103** has access to a version of the episode within the operator's system **103.** Since the content provider **104** (e.g., HBO) is the originator of the content (e.g., the episode of "Boardwalk Empire"), in various embodiments the content provider **104** will have access to information to know which operators **103** have a version of the content available to stream on their distribution networks **106.**

### Content Services Module

In various embodiments, the operator's system **103** also includes a content services module **500** that receives a request from a content provider **104** to route content to a subscriber's web browser over the operator's distribution network **106.** Thus, FIG. 5 illustrates a flow diagram of the content services module **500** according to various embodiments. This flow diagram may correspond to the steps carried out by the processor **204** in the HTTP proxy server **200** shown in FIG. 2 as it executes the module **500** in the server's RAM memory **217** according to various embodiments.

As previously described, in various embodiments, the website module **400** determines whether a particular piece of content requested by a subscriber **101** should be streamed to the subscriber's web browser over the Internet and the operator's unmanaged network **102** or over the operator's distribution network **106.** In instances in which the website module **400** determines the content should be streamed over the operator's distribution network **106,** the website module **400** sends a request to the operator **103** directing the operator **103** to stream the particular piece of content over the operator's distribution network **106** according to various embodiments. Therefore, in Step **502,** the content services module **500** receives the request for the content to be streamed over the operator's distribution network **106.** In various embodiments, the request includes information to identify the subscriber **101** and the particular piece of content. In addition, in various embodiments, the request may include additional information such as the format quality that should be streamed to the subscriber **101.** Thus, returning to the example, the content services module **500** receives a request to stream the episode of "Boardwalk Empire" in HD format to the subscriber's web browser.

In response, the content services module **500** determines whether the content is available within the operator's system **103,** shown as Step **503.** Therefore, in various embodiments, the content services module 500 queries the operator's media library to determine if the operator **103** has a version of the episode of "Boardwalk Empire" available in its library. For instance, in particular embodiments, the operator **103** has a programming guide stored in one or more data storage **105** and the content services module **500** queries the programming guide to determine whether the episode of "Boardwalk Empire" is stored within the operator's system **103.**

If the content services module **500** determines the content is not stored internally, the content services module **500** determines if a version of the content is available from an external source, shown as Step **504.** For instance, in particular embodiments, the content provider **104** may have one or more media libraries available to one or more operators **103** so that these operators **103** may access different content and download the content to the operators' systems **103.** These libraries may be accessible through different types of communication channels such as the Internet and/or a dedicated fiber optics network. Therefore, in these instances, the operator **103** queries the content provider's available libraries to see whether the content is available for download. In other embodiments, other externals sources may be available to the operators **103** from which the operators **103** can retrieve content, as can be envisioned by those of ordinary skill in the art in light of this disclosure.

Thus, if the content services module **500** determines the content is not stored internally and is not available from an external source, the module **500** exits the process, shown as Step **510.** However, if the content services module **500** determines the content is available from an external source, the module **500** retrieves the content from the external source, shown as Step **505.** Therefore, returning to the example, the content services module **500** may determine that the episode of "Boardwalk Empire" is not available internally, however the module **500** may determine the episode is available through a library provided by HBO. Further, the module **500** may determine that a version of the episode is available in HD format. Therefore, the module **500** may retrieve the HD version of the episode from the library by downloading the version over a dedicated fiber optics network. Once downloaded, the content services module **500** facilitates having the HD version of the episode streamed over the operator's distribution network **106** to the subscriber's web browser, shown as Step **509.** It should be noted that in various embodiments, the content services module **500** may be configured to encapsulate the content that is in a web video formant into a standard cable MPEG transport (e.g., transcode the content) so that the content is compatible with the operator's system. As a result, the subscriber **101** is able to view the HD version of the episode of "Boardwalk Empire" on the subscriber's web browser.

Returning to Step **503,** if the content services module **500** determines the requested episode of "Boardwalk Empire" is available internally, the content services module **500** determines whether the episode can be streamed from a CDN, shown as Step **506.** For instance, in particular embodiments, the content services module **500** determines where the subscriber **101** is located within the operator's network. For example, in one embodiment, the content services module **500** queries subscriber information to determine where the subscriber **101** is located. While in another embodiment, the request received from the content provider **104** may include such information within the request. For example, the request may indicate that the subscriber **101** is located in "Operator Region = New York City" and "Operator Locale = Manhattan." Therefore, the content services module **500** determines if a CDN is located near the subscriber **101** that has an HD version of the requested episode of "Boardwalk Empire" available to stream to the subscriber's web browser. If so, the content services module **500** directs the identified CDN to stream the episode to the subscriber's web browser, shown as Step **507.** If an HD version of the requested episode of "Boardwalk Empire" is not available to stream from the identified CDN, the content services module **500** retrieves the content from a central library, shown as Step **508,** and facilitates having the episode streamed to the subscriber's web browser over the operator's distribution network **106,** shown as Step **509.** For instance, in various embodiments, the operator **103** may utilize a managed network bandwidth policy server to provide committed DOCSIS bandwidth to stream the premium version of the content to the subscriber **101** (e.g., the HD version of the episode of "Boardwalk Empire" to the subscriber **101).** In addition, the operator **103** may utilize existing video media pumps used for the operator's existing VOD services in order to stream the content dynamically.

Further, in various embodiments, the operator **103** may employ some type of security to the transport layer such as Secure Socket Layer (SSL), Transport Layer Security (TLS), and/or Hypertext Transfer Protocol Secure (HTTPS) in order to better secure the content over the transport layer. In addition, in various embodiments, the operator **103** may employ dynamic one-time URLs to allow subscribers **101** to reach access controlled content. This may provide content providers **104** with better value and may entice content providers **104** to co-locate their premium content within the operator's system. Thus, as a result, content providers **104** may be able to reduce their capital investment in web servers by allowing the operator 103 to host the content providers' content and to stream such content to subscribers **101.**

As a result, in various embodiments, subscribers **101** of an operator **103** are free to browse the Internet using their standard web browser and receive customized and/or personalized displays that are provided to these subscribers 101 based on the subscribers' subscription level. Further, in various embodiments, the operator 103 is able to provide "premium" experiences to the subscribers **101** using the operator's distribution network **106** and subscription management system. For instance, in particular embodiments, the operator **103** is able to provide higher quality content to its subscribers' web browsers and control the access to such higher quality content via the subscribers' subscriptions with the operator **103.** In addition, in particular embodiments, the operator **103** is able to provide additional functionality via the subscribers' web browsers such as interactive elements like chat, voting, Facebook^{®}, and recommendations, and/or embedded media players (e.g. HTML5 MediaPlayer) that allow for subscribers **101** to pause and resume content on other devices like the subscribers' set-top boxes. Thus, as a result, in these particular embodiments, the operator **103** is able to provide an enhanced experience to its subscribers **101** who receive their Internet service from the operator **103.**

### Conclusion

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended listing of inventive concepts. Although specific terms are employed herein, they are used in a generic and descriptive sense only and not for purposes of limitation.

Further examples of the invention are as follows:
E1. A system for authenticating a subscriber of a content distribution operator requesting a website of a content provider, the system comprising:
   one or more storage media; and
   one or more computer processors configured to:
      (a) receive a request from the subscriber, the request identifying the website;
      (b) retrieve subscription information on the subscriber from the one or more storage media;
      (c) determine, from the subscription information, a level of subscription the subscriber has with respect to media content provided by the content provider and distributed by the content distribution operator;
      (d) insert a token into the request, the token identifying the level of subscription; and
      (e) route the request to a web server, wherein the request is configured so that the web server can read the token to identify the level of subscription for the subscriber and provide a particular version of the website to the subscriber that is based on the level of subscription.
E2. The system of example no. 1, wherein the content distribution operator provides the token to a plurality of content providers and the one or more computer processors are configured to:
   retrieve website information from the one or more storage media, the website information indicating whether the content provider is one of the plurality of content providers to which the content distribution operator provides the token; and
   in response to the content provider being one of the plurality of content providers, perform (b) through (e).
E3. The system of example no. 1, wherein the level of subscription is configured to indicate whether the subscriber is entitled to receive premium quality content so that the web server provides the particular version of the website providing access to high definition quality content.
E4. The system of example no. 1, wherein the token comprises one or more fields provided in the header of the request.
E5. The system of example no. 4, wherein the one or more fields comprise one or more of: (1) operator name, (2) operator, (3) operator locale, (4) duration, (6) URL, (7) service level, (8) subscriber information, and (9) sequence.
E6. The system of example no. 1, wherein the token comprises one or more fields provided in a cookie and the one or more computer processors are configured to download the cookie to a computing device of the subscriber.
E7. The system of example no. 1 further comprising a content distribution network and the one or more computer processors are configured to:
   receive a request from the web server to stream the particular version of the website over the distribution network; and
   in response to receiving the request to stream the particular version of the website over the distribution network, stream the particular version of the website over the distribution network to a computing device of the subscriber.
E8. The system of example no. 7, wherein the one or more computer processors are configured to reformat the particular version of the website into a format that is compatible with the distribution network.
E9. The system of example no. 1 further comprising a content distribution network and the one or more computer processors are configured to:
   receive a request from the web server to stream a particular piece of media content made available on the website over the content distribution network; and
   in response to receiving the request to stream the particular piece of media content over the content distribution network, stream the particular piece of media content over the content distribution network to a computing device of the subscriber.
E10. The system of example no. 9, wherein the one or more computer processors are configured to, in response to receiving the request to stream the particular piece of media content over the content distribution network:
   retrieve the particular piece of media content from the one or more media storage; and
   stream the retrieved piece of media content over the content distribution network to the computing device of the subscriber.
E11. A method for authenticating a subscriber of a content distribution operator requesting a website of a content provider, the method comprising the steps of:
   (a) receiving a request from the subscriber, the request identifying the website;
   (b) retrieving subscription information on the subscriber from one or more storage media;
   (c) determining by one or more computer processors, from the subscription information, a level of subscription the subscriber has with respect to media content provided by the content provider and distributed by the content distribution operator;
   (d) inserting a token into the request, by one or more computer processors, the token identifying the level of subscription; and
   (e) routing the request to a web server, wherein the request is configured so that the web server can read the token to identify the level of subscription for the subscriber and provide a particular version of the website to the subscriber that is based on the level of subscription.
E12. The method of example no. 11, wherein the content distribution operator provides the token to a plurality of content providers and the method comprises the steps:
   retrieving website information from the one or more storage media, the website information indicating whether the content provider is one of the plurality of content providers to which the content distribution operator provides the token; and
   in response to the content provider being one of the plurality of content providers, performing Steps (b) through (e).
E13. The method of example no. 11 further comprising the steps of:
   receiving a request from the web server to stream the particular version of the website over a content distribution network of the content distribution operator; and
   in response to receiving the request to stream the particular version of the website over the distribution network, streaming the particular version of the website over the distribution network to a computing device of the subscriber.
E14. The method of example no. 13 further comprising the step of reformatting the particular version of the website into a format that is compatible with the distribution network.
E15. The method of example no. 11 further comprising the steps of:
   receiving a request from the web server to stream a particular piece of media content made available on the website over a content distribution network of the content distribution operator; and
   in response to receiving the request to stream the particular piece of media content over the content distribution network, streaming the particular piece of media content over the content distribution network to a computing device of the subscriber.
E16. The method of example no. 15 comprising the steps of:
   in response to receiving the request to stream the particular piece of media content over the content distribution network:
      retrieving the particular piece of media content from the one or more media storage; and
      streaming the retrieved piece of media content over the content distribution network to the computing device of the subscriber.
E17. A non-transitory computer-readable medium containing executable code for authenticating a subscriber of a content distribution operator requesting a website of a content provider, that when executed by at least one computer processor causes the at least one computer processor to:
   (a) receive a request from the subscriber, the request identifying the website;
   (b) retrieve subscription information on the subscriber from one or more storage media;
   (c) determine, from the subscription information, a level of subscription the subscriber has with respect to media content provided by the content provider and distributed by the content distribution operator;
   (d) insert a token into the request, the token identifying the level of subscription; and
   (e) route the request to a web server, wherein the request is configured so that the web server can read the token to identify the level of subscription for the subscriber and provide a particular version of the website to the subscriber that is based on the level of subscription.
E18. A system for selecting a website of a content provider to provide to a subscriber of a content distribution operator, the system comprising:
   one or more computer processors configured to:
      (a) receive a request for the website, the request comprising a token identifying a level of subscription the subscriber has with respect to media content provided by the content provider and distributed by the content distribution operator;
      (b) determine from the token the level of subscription for the subscriber; and
      (c) provide a particular version of the website to the subscriber based on the level of subscription.
E19. The system of example no. 18, wherein the level of subscription entitles the subscriber access to premium quality media content and the particular version of the website provides access to the premium quality media content.
E20. The system of example no. 18, wherein the token identifies the content distribution operator and the particular version of the website is also based on the content distribution operator.
E21. The system of example no. 18, wherein the website is provided by the content distribution operator.
E22. The system of example no. 18, wherein the one or more computer processors are configured to:
   receive a subsequent request to stream a particular piece of media content made available on the website; and
   in response to receiving the subsequent request:
      determine whether to stream the particular piece of media content over a content distribution network of the content distribution operator; and
      in response to determining to stream the particular piece of media content over the content distribution network of the content distribution operator, send a content media request to the content distribution operator requesting the content distribution operator to stream the particular piece of media content over the content distribution network to a computing device of the subscriber.
E23. A method for selecting a website of a content provider to provide to a subscriber of a content distribution operator, the method comprising the steps of:
   (a) receiving a request for the website, the request comprising a token identifying a level of subscription the subscriber has with respect to media content provided by the content provider and distributed by the content distribution operator;
   (b) determining from the token, by one or more computer processors, the level of subscription for the subscriber; and
   (c) providing a particular version of the website to the subscriber based on the level of subscription.
E24. The method of example no. 23, wherein the level of subscription entitles the subscriber access to premium quality media content and the particular version of the website provides access to the premium quality media content.
E25. The method of example no. 23, wherein the token identifies the content distribution operator and the particular version of the website is also based on the content distribution operator.
E26. The method of example no. 23, wherein the website is provided by the content distribution operator.
E27. The method of example no. 23 further comprising the steps of:
   receiving a subsequent request to stream a particular piece of media content made available on the website; and
   in response to receiving the subsequent request:
      determining, by the one or more computer processors, whether to stream the particular piece of media content over a content distribution network of the content distribution operator; and
      in response to determining to stream the particular piece of media content over the content distribution network of the content distribution operator, sending a content media request to the content distribution operator requesting the content distribution operator to stream the particular piece of media content over the content distribution network to a computing device of the subscriber.
E28. A non-transitory computer-readable medium containing executable code for selecting a website of a content provider to provide to a subscriber of a content distribution operator, that when executed by at least one computer processor causes the at least one computer processor to:
   (a) receive a request for the website, the request comprising a token identifying a level of subscription the subscriber has with respect to media content provided by the content provider and distributed by the content distribution operator;
   (b) determine from the token the level of subscription for the subscriber; and
   (c) provide a particular version of the website to the subscriber based on the level of subscription.
E29. A system for routing a particular piece of media content provided by a content provider to a web browser residing on a computing device of a subscriber of a content distribution operator, the system comprising:
   a content distribution network for the content distribution operator; and
   one or more computer processors configured to:
      (a) receive a request to route the particular piece of media content over the content distribution network to the web browser residing on the computing device of the subscriber;
      (b) retrieve the particular piece of media content; and
      (c) stream the particular piece of media content over the content distribution network to the web browser residing on the computing device of the subscriber.
E30. The system of example no. 29, wherein the request comprises an identifier for a format quality to provide the particular piece of media content in and the one or more computer processors are configured to retrieve the particular piece of media content in the format quality. E31. The system of example no. 30, wherein the format quality comprises high definition format.
E32. The system of example no. 29, wherein the particular piece of media content is streamed over the content distribution network using a security mechanism comprising at least one of a secure socket layer, transport layer security, or hypertext transfer protocol secure.
E33. The system of example no. 29, wherein the one or more computer processors are configured to carry out (b) by:
   determining whether the particular piece of media content is available through the content distribution operator;
   in response to the particular piece of media content being available through the content distribution operator, retrieving the particular piece of media content from the content distribution operator; and
   in response to the particular piece of media content not being available through the content distribution operator, retrieving the particular piece of media content from a source external of the content distribution operator.
E34. The system of example no. 33, wherein the source external of the content distribution operator is one or more storage media of the content provider.
E35. The system of example no. 29 comprising a plurality of locally situated content distribution networks, and wherein the one or more computer processors are configured to carry out (b) and (c) by:
   identifying one of the locally situated content distribution networks located nearest the subscriber;
   retrieving the particular piece of media content from the identified locally situated content distribution network; and
   streaming the particular piece of media content over the identified locally situated content distribution network to the web browser residing on the computing device of the subscriber.
E36. A method for routing a particular piece of media content provided by a content provider to a web browser residing on a computing device of a subscriber of a content distribution operator, the method comprising the steps of:
   (a) receiving a request to route the particular piece of media content over a content distribution network for the content distribution operator to the web browser residing on the computing device of the subscriber;
   (b) retrieving, by one or more computer processors, the particular piece of media content; and
   (c) streaming the particular piece of media content over the content distribution network to the web browser residing on the computing device of the subscriber.
E37. The method of example no. 36, wherein the request comprises an identifier for a format quality to provide the particular piece of media content in and the step for retrieving the particular piece of media content is carried out by retrieving the particular piece of media content in the format quality.
E38. The method of example no. 36, wherein step (b) is carried out by:
   determining whether the particular piece of media content is available through the content distribution operator;
   in response to the particular piece of media content being available through the content distribution operator, retrieving the particular piece of media content from the content distribution operator; and
   in response to the particular piece of media content not being available through the content distribution operator, retrieving the particular piece of media content from a source external of the content distribution operator.
E39. The method of example no. 38, wherein steps (b) and (c) are carried out by:
   identifying one of a plurality of locally situated content distribution networks located nearest the subscriber;
   retrieving the particular piece of media content from the identified locally situated content distribution network; and
   streaming the particular piece of media content over the identified locally situated content distribution network to the web browser residing on the computing device of the subscriber.
E40. The method of example no. 36, wherein the particular piece of media content is streamed over the content distribution network using a security mechanism comprising at least one of a secure socket layer, transport layer security, or hypertext transfer protocol secure.

## Claims

1. A system for routing a particular piece of media content provided by a content provider to a web browser residing on a computing device, of a subscriber of a content distribution operator, the system comprising:
a content distribution network for the content distribution operator; and one or more computer processors configured to:
(a) receive a request, to route the particular piece of media content over the content distribution network to the web browser residing on the computing device of the subscriber;
(b) retrieve the particular piece of media content; and
(c) stream the particular piece of media content over the content distribution network to the web browser residing on the computing device of the subscriber.

2. The system of Claim 1, wherein the request comprises an identifier for a format quality to provide the particular piece of media content in and the one or more computer processors are configured to retrieve the particular piece of media content in the format quality.

3. The system of Claim 2, wherein the format quality comprises high definition format.

4. The system of Claim 3, wherein the particular piece of media content is streamed over the content distribution network using a security mechanism comprising at least one of a secure socket layer, transport layer security, or hypertext transfer protocol secure.

5. The system of Claim 3, wherein the one or .more computer processors are configured to carry out (b) by:
determining whether the particular piece of media content is available through the content distribution operator;
in response to the particular piece of media content being available through the content distribution operator, retrieving the particular piece of media content from the content distribution operator; and
in response to the particular piece of media content not being available through the content distribution operator, retrieving the particular piece of media content from a source external of the content distribution operator.

6. The system of Claim 5, wherein the source external of the content distribution operator is one or more storage media of the content provider.

7. The system of Claim 1 comprising a plurality of locally situated content distribution networks, and wherein the one or more computer processor are configured to carry out (b) and (c) by:
identifying one of the locally situated content distribution networks located nearest the subscriber;
retrieving the particular piece of media content from the identified locally situated content distribution network; and
streaming the particular piece of media content over the identified locally situated content distribution network to the web browser residing on the computing device of the subscriber.

8. A method for routing a particular piece of media content provided by a content provider to a web browser residing on a computing device of a subscriber of a content distribution operator, the method comprising the steps of:
(a) receiving a request to route the particular piece of media content over a content distribution network for the content distribution operator to the web browser residing on the computing device of the subscriber;
(b) retrieving, by one or more computer processors, the particular piece of media content; and
(c) streaming the particular piece of media content over the content distribution network to the web browser residing on the computing device of the subscriber.

9. The method of Claim 8, wherein the request comprises an identifier for a format quality to provide the particular piece of media content in and the step for retrieving the particular piece of media content is carried out by retrieving the particular piece of media content in the format quality.

10. The method of Claim 8, wherein step (h) is carried out by:
determining whether the particular piece of media content is available through the content distribution operator;
in response to the particular piece of media content being available through the content distribution operator, retrieving the particular piece of media content from the content distribution operator; and
in response to the particular piece of media content not being available through the content distribution operator, retrieving the particular piece of media content from a source external of the content distribution operator.

11. The method of Claim 10, wherein steps (b) and (c) are carried out by:
identifying one of a plurality of locally situated content distribution networks located nearest the subscriber;
retrieving the particular piece of media content from the identified locally situated content distribution network; and
streaming the particular piece of media content over the identified locally situated content distribution network to the web browser residing on the computing device of the subscriber.

12. The method of Claim 8, wherein the particular piece of media content is streamed over the content distribution network using a security mechanism comprising at least one of a secure socket layer, transport layer security, or hypertext transfer protocol secure.
